(19) Europäisches Patentamt

European Patent Office

Office européen des brevets

(11) **EP 1 635 447 A2**

(12) **EUROPEAN PATENT APPLICATION**

(43) Date of publication:
**15.03.2006 Bulletin 2006/11**

(51) Int Cl.:
*H02P 6/18* (2006.01)

(21) Application number: **04106815.6**

(22) Date of filing: **21.12.2004**

(84) Designated Contracting States:
**AT BE BG CH CY CZ DE DK EE ES FI FR GB GR HU IE IS IT LI LT LU MC NL PL PT RO SE SI SK TR**
Designated Extension States:
**AL BA HR LV MK YU**

(30) Priority: **08.09.2004 KR 2004071809**

(71) Applicant: **SAMSUNG ELECTRONICS CO., LTD.**
**Suwon-si,**
**Gyeonggi-do 442-742 (KR)**

(72) Inventors:
• **Kim, Tae-duk**
**Gyeonggi-do (KR)**
• **Kim, Hyung-oh**
**Gyeonggi-do (KR)**
• **Lee, Joon-hwan**
**Gyeonggi-do (KR)**

(74) Representative: **Geary, Stuart Lloyd et al**
**Venner Shipley LLP**
**20 Little Britain**
**London EC1A 7DH (GB)**

(54) **Three Phase Motor Driving Apparatus**

(57)    The present invention relates to a method of initially driving a three-phase motor, comprising transmitting a first PWM driving signal to an inverter to excite two phases corresponding to position of a rotor provided in the three-phase motor; measuring excitation phase current corresponding to the first PWM driving signal within a cycle of the first PWM driving signal by periods equal to the cycle of the first PWM driving signal; calculating a reference measured-value on the basis of values continuously measured by predetermined reference times from the first measurement with regard to the excitation phase current; calculating a compare measured-value on the basis of values continuously measured at predetermined compare measuring intervals by the reference times with regard to the excitation phase current after the excitation phase current is measured by predetermined delay times; and transmitting a second PWM driving signal for commutation according to rotation of the rotor to the inverter when the compare measured-value is higher the reference measured-value by a predetermined rate according as the reference measured-value is compared with the compare measured-value. Thus the present invention provides an initial driving method for a three-phase motor, in which position of a rotor is determined while the three-phase motor reaches a predetermined speed from a stop state, thereby decreasing power consumption in controlling commutation according to the position of the rotor, and reducing production cost.

FIG. 3

START

S10 — DETERMINING INITIAL POSITION OF ROTATOR

S11 — TRANSMITTING FIRST PWM DRIVING SIGNAL

S12 — CALCULATING REFERENCE MEASURED-VALUE($I_{Ref}$)

CALCULATING COMPARE MEASURED-VALUE($I_{com}$) — S13

No    $I_{Ref} * Cp \leq I_{com}$? — S14

Yes

S15 — TRANSMITTING SECOND PWM DRIVING SIGNAL

S16 — ROTATION SPEED ≥ REFERENCE SPEED?    No

Yes

END

**Description**

The present invention relates to an apparatus for driving three-phase brushless dc motor, comprising a three-phase bridge for providing a three-phase output for energising a three-phase motor and switching control means for switching said bridge in dependence a signal at a rotor position signal input so as to generate a three-phase motor driving output;

For 3-phase brushless DC motors to operate optimally, it is necessary for the swiching of the phases to take place when the rotor is at specific angular positions. In order to do this, some form of rotor position sensor is required and the back emfs generated in the windings of the motor have been used for this purpose.

A problem arises, however, because the back emfs are only generated when the rotor is rotating. When the rotor is stationary, i.e. when the motor being energised, no back emfs are generated and the position of the rotor cannot be determined therefrom. If the phases are switched inappropriately, the rotor my take a relatively long time to start and may not start at all, which is wasteful of electric power.

In circumstances where an discrete rotor position sensor is not desirable, such as in the compressor of an air conditioner or a refrigerator, the above problem has been overcome by forcing the rotor to a predetermined position by energising the stator and then starting normal operation. However, in this case, the acceleration of the motor is inefficient.

A method for sensing the initial position of the rotor without a discrete position sensor is disclosed in KR-A-2000-24078.

In the method described in KR-A-2000-24078, a pulse width modulation (PWM) driving signal comprises sensing pulses ($P_{pulse}$) for determining the position of the rotor in addition to driving pulses ($P_{phase}$) for generating torque. Since the motor is a three-phase and three-excitation motor such as a brushless direct current (BLDC) motor, a complete rotation has an electrical angle of 360 degrees, so that commutation should be performed at every electrical angle of 60 degrees to ensure normal rotation of the motor.

However, in this conventional method, the sensing pulses ($P_{pulse}$) are additionally needed to determine the position of the rotor and, therefore, a switching operation of the inverter is required for generating the sensing pulses ($P_{pulse}$). This causes a switching loss and, due to the switching pulses ($P_{pulse}$), the carrier frequency of the PWM signal must be more than doubled to generate the same torque as a motor not using the sensing pulses ($P_{pulse}$). Furthermore, the sensing pulses ($P_{pulse}$) are generally accompanied by switching noise. Therefore, a controller such as a microprocessor or the like is required to have a high performance A/D converter with the resultant increased production costs.

An apparatus according to the present invention is characterised by current measuring means for sensing the current supplied to the three-phase bridge and means for generating a rotor position signal, in dependence on the output of the current measuring means, and applying the generated rotor position signal to said rotor position signal input.

The switching control means may be configured to switch the three-phase bridge to the next phase when the measured current exceeds a reference valued derived from the current initially measured in the present phase, e.g. by a predetermined amount or proportion. The measured currents are preferably averages of instantaneous current readings.

The current measuring means may measure the current supplied to the three-phase bridge in synchronism with a pulse signal being output to a switching element of the three-phase bridge.

An apparatus, according to the present invention, is preferably installed so as to be operatively coupled to a three-phase brushless dc motor.

Additional preferred and optional features are set forth in claims 6 to 17 appended hereto.

An embodiment of the present invention will now be described by way of example, with reference to the accompanying drawings, in which:

Figure 1 is a schematic diagram of a motor and driving apparatus according to the present invention;
Figure 2 is a graph showing measured values of excitation phase current with respect to the rotational position of a rotor in an interior permanent magnet (IPM) type four-pole motor;
Figure 3 is a flowchart of an initial driving method for a three-phase motor according to the present invention;
Figures 4A and 4B are graphs showing the waveform of a PWM driving signal, transmitted to an inverter, and the waveform of an excitation phase current due to the PWM driving signal according to the present invention; and
Figures 5A to 5C are graphs showing pulse waveforms according to a bi-polar type, an out-going type and an on-going type.

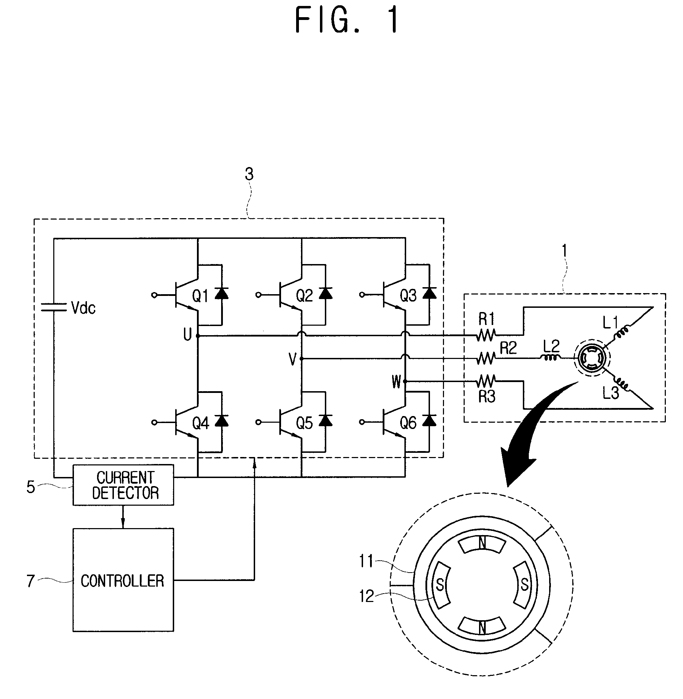

Referring to Figure 1, a motor and driving apparatus according to the present invention comprises a three-phase motor 1, an inverter 3, a current detector 5 and a controller 7.

The three-phase motor 1 comprises a stator 11, having resistors R1 ~ R3 and three inductors L1 ~ L3, and an interior rotor 12. In the three-phase motor 1, phase terminals are connected to the inverter 3 and the inductors L1 ~ L3 generate magnetic fields when excitation phase currents are introduced and flow therethrough, thereby rotating the interior rotor 12.

The inverter 3 comprises six switching transistors Q1 ~ Q6. The switching transistors Q1 ~ Q6 form three pairs, wherein one pair of switching transistors are connected in series and connected to the phase terminals of the three-phase motor 1. One transistor Q1 ~ Q3 (hereinafter, referred to as the "upper transistor") of each pair of switching transistors is connected to a plus terminal of an external dc source, Vdc, and the other transistor Q4~Q6 (hereinafter, referred to as the "lower transistor") is connected to a minus terminal of the external dc source, Vdc.

The excitation phase currents supplied from the inverter 3 to the three-phase motor 1 are detected by the current detector 5 and each transistor Q1~Q6 has a base terminal which receives a switching control signal from the controller 7.

The controller 7 drives the inverter 3 in dependence on three-phase excitation. That is, the controller 7 turns on one of three upper transistors Q1~Q3 of the inverter 3 and, at the same time, turns on one of three lower transistors Q4~Q6 having a phase different from the phase of the turned-on upper transistor. According to this phase excitation, six different excitation phase current paths can be established as per the following <Table 1>.

<Table 1 >

| Symbol | Current direction |
| --- | --- |
| IU | U -> V |
| IV | V -> W |
| IW | W -> U |
| -IU | V -> U |
| -IV | W -> V |
| -IW | U -> W |

Where, the arrow indicates the direction of the current flowing between pairs of phase terminals U, V, W. For example, "U -> V" means that the excitation phase current is flowing from phase terminal U of the three-phase motor 1 to phase terminal V thereof.

The controller 7 turns the switching transistors Q1~Q6 of the inverter 3 on and off selectively on the basis of the current detected by the current detector 5.

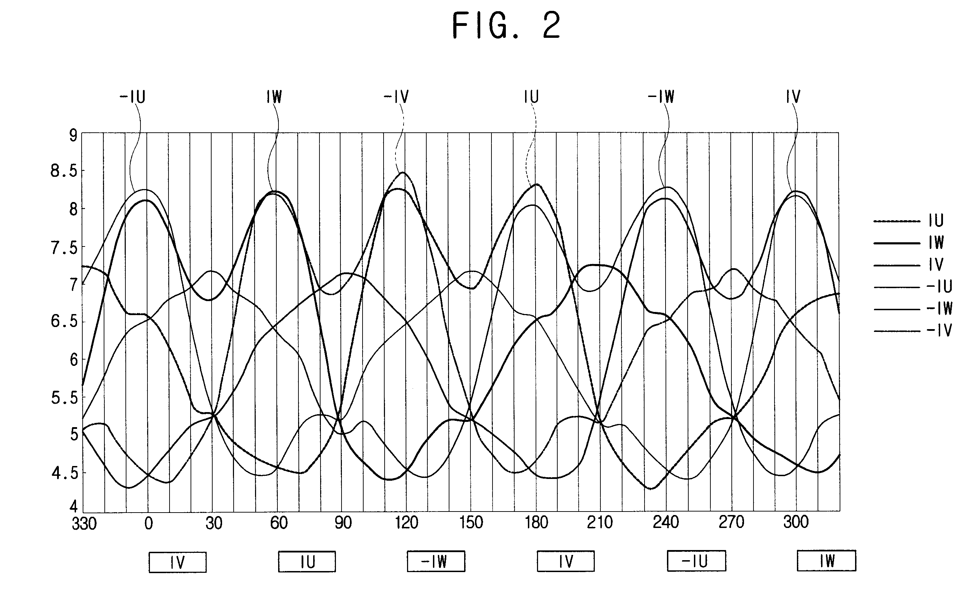

Referring to Figure 2, in the case of an IPM type four-pole motor 1, when the rotor 12 is disposed at an angular position in the range from 30° to 90°, the IU excitation phase current is supplied from the inverter 3 to the three-phase motor 1, thereby allowing the rotor 12 to generate forward torque. When the rotor 12 is disposed an angular position in the range from 90° to 150°, the -IW excitation phase current is supplied from the inverter 3 to the three-phase motor 1, thereby allowing the rotor 12 to generate forward torque. When the rotor 12 is disposed at an angular position within the range from 150° to 210°, the IV excitation phase currentis supplied from the inverter 3 to the three-phase motor 1, thereby allowing the rotor 12 to generate forward torque. When the rotor 12 is disposed at an angular position within the range from 210° to 270°, the -IU excitation phase current is supplied from the inverter 3 to the three-phase motor 1, thereby allowing the rotor 12 to generate forward torque. When the rotor 12 is disposed at an angular position within the range from 270° to 330°, the IW excitation phase current is supplied from the inverter 3 to the three-phase motor 1, thereby allowing the rotor 12 to generate forward torque. When the rotor 12 is disposed at an angular position within the range from 330° to 30°, the -IV excitation phase current is supplied from the inverter 3 to the three-phase motor 1, thereby allowing the rotor 12 to generate forward torque.

The controller 7 determines the position of the rotor 12 on the basis of the measured value of the excitation phase current, detected by the current detector 5, and determines commutation point according to the determined position of the rotor 12.

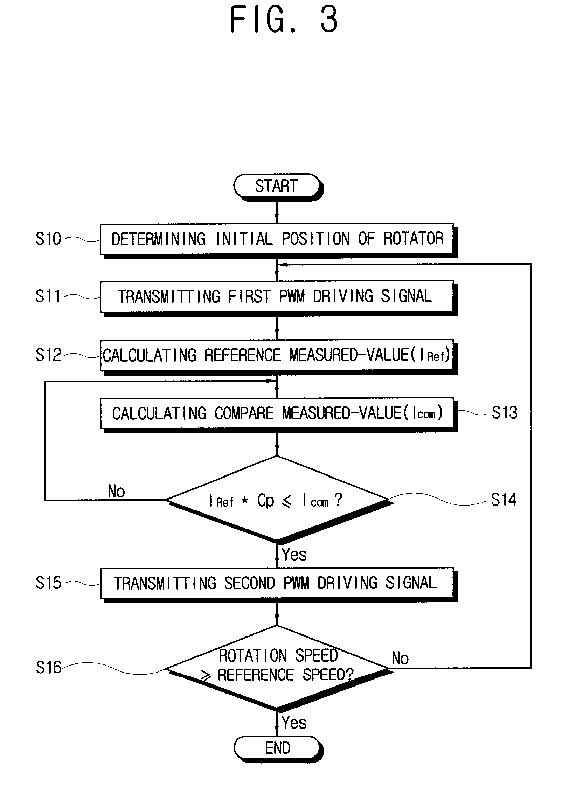

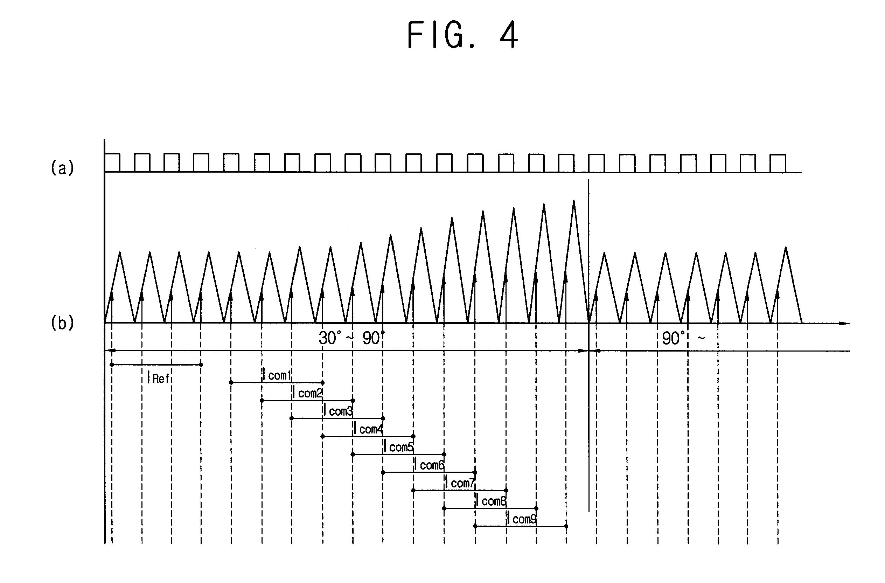

An initial driving method of the three-phase motor 1 will now be described with reference to Figures 3 and 4. Figure 4A illustrates the pulse waveform of the PWM driving signal transmitted from the controller 7 to the inverter 3. The pulse waveform of Figure 4A causes two of the switching transistors Q1~Q6 of the inverter 3 to be turned on and off according to the phase to be excited, thereby supplying the excitation phase currents as shown in <Table 1 > to the three-phase motor 1.

First, when the three-phase motor 1 is initially driven, at operation S10, the controller 7 determines the initial position of the rotor 12 in the three-phase motor 1. As an example of determining the initial position of the rotor 12 in the motor 1, the rotor 12 can be forcibly aligned by randomly exciting two phases.

As another examples of determining the initial position of the rotor 12 in the three-phase motor 1, there are calculation methods as disclosed in KR 2004-66888 and KR 2004-68117, applied for by the present applicant. Besides, various methods may be used for determining the initial position of the rotor 12 in the three-phase motor 1.

When the initial position of the rotor 12 is determined, at operation S11, the controller 7 outputs a first PWM driving signal for exciting two phases corresponding to the initial position of the rotor to the inverter 3. For example, in the case where the initial angular position of the rotor 12 is 30°, the controller 7 outputs the first PWM driving signal, which has the pulse waveform of Figure 4A, to the switching transistors Q1 and Q5 of the inverter 3 so as to supply the IU excitation phase current to the three-phase motor 1.

The IU excitation phase current output from the inverter 3 in correspondence with the first PWM driving signal has the waveform as shown in Figure 4B.

The controller 7 controls the current detector 5 to measure periodically the excitation phase current corresponding to the first PWM driving signal. The measuring period of the current detector 5 for measuring the excitation phase current is equal to one cycle of the first PWM driving signal. Furthermore, the excitation phase current is measured by the current detector 5 within each cycle of the first PWM driving signal. The excitation phase current is measured by the current detector 5 within the turned on sections of the first PWM driving signal.

The controller 7 calculates a reference value on the basis of values, continually measured at predetermined reference times from the first measurement of the excitation phase current. In Figure 4, the number of reference times is four by way of example.

At operation S12, the controller 7 calculates the reference value with an average of the values continually being measured at the reference times from the first measurement of the excitation phase current. Here, the average is calculated by the following [equation 1].

[equation 1]

$$I_{ref} = \frac{1}{N} \times \sum_{i=1}^{N} x_i$$

where $I_{ref}$ is the reference value, N is the reference number and $x_i$ is the measured value at the ith measurement.

After the excitation phase current is completely measured at predetermined delay times, the controller 7 calculates a compare value on the basis of values, continually measured at predetermined compare measuring intervals by the reference times, at operation S13.

The compare value is calculated by the same method as used in calculating the reference value. For example, when the reference value is calculated with the average of the values continually measured at the reference times, the compare value is likewise calculated with the average of the values continually measured at the reference times.

The compare value due to the average is calculated by the following [equation 2].

[equation 2]

$$I_{com} = \frac{1}{N} \times \sum_{c=j}^{N+j-1} x_c$$

where $I_{com}$ is the compare measured-value, $x_c$ is the measured value at $C^{th}$ measurement, and j is a value obtained by adding 1 to the delay times.

In calculating the compare value, the delay times can be equal to the reference times. That is, when the controller 7 calculates the reference value on the basis of the values measured at the reference times, e.g. N-times from the first measurement, the controller 7 calculates the compare value on the basis of the value continually measured by the reference times from the measured value at (N+1)th measurement, i.e., by the N-times from the measured value at the (N+1)th measurement.

The controller 7 can calculate the compare value at every measurement from the (N+1)th measurement. That is, the controller 7 calculates the compare value (hereinafter, referred to as "first compare value") on the basis of the values continually measured at the reference times from the measured value at the (N+1)th measurement and then calculates the compare value (hereinafter, referred to as "second compare value") on the basis of the values continually measured at the reference times from the measured value at the (N+2)th measurement.

At operation S14, the controller 7 compares the reference value with the first compare value and checks whether the first compare value is higher than the reference value by a predetermined amount. This comparing process can be represented by the following [equation 3].

[equation 3]

$$I_{ref} \times Cp \leq I_{com}$$

where $Cp$ (compare parameter) is a constant selected according to the characteristics of the three-phase motor 1 and which can be selected by measurement.

When the reference value and the first compare value do not satisfy equation 3, the controller 7 calculates the second compare value as the above-described method and checks again whether the second compare value and the reference value satisfy equation 3. The controller 7 outputs the first PWM driving signal to the inverter 3 until equation 3 is satisfied and thus the inverter 3 outputs the IU excitation phase current to the three-phase motor 1 in correspondence with the first PWM driving signal. On the other hand, when the equation 3 is satisfied, at operation S15, the controller 7 outputs a second PWM driving signal for commutation, in accordance with the angular position of the rotor 12, to the inverter 3. The second PWM driving signal causes the switching transistors Q3 and Q5 of the inverter 3 to be turned on and off, thereby allowing the inverter 3 to output the -IW excitation phase current to the three-phase motor 1.

After outputting the second PWM driving signal, at operation S16, the controller 7 determines whether rotational speed of the three-phase motor 1 is higher than reference speed. When the rotation speed is higher than the reference speed, the controller 7 stops the process for determining the point of commutation time with regard to the excitation phase current. On the other hand, when the rotation speed is equal to or lower than the reference speed, the operations S11 through S15 of Figure 3 are processed with regard to the second PWM driving signal, thereby searching the point of commutation time for the excitation phase current so as to output a third PWM driving signal.

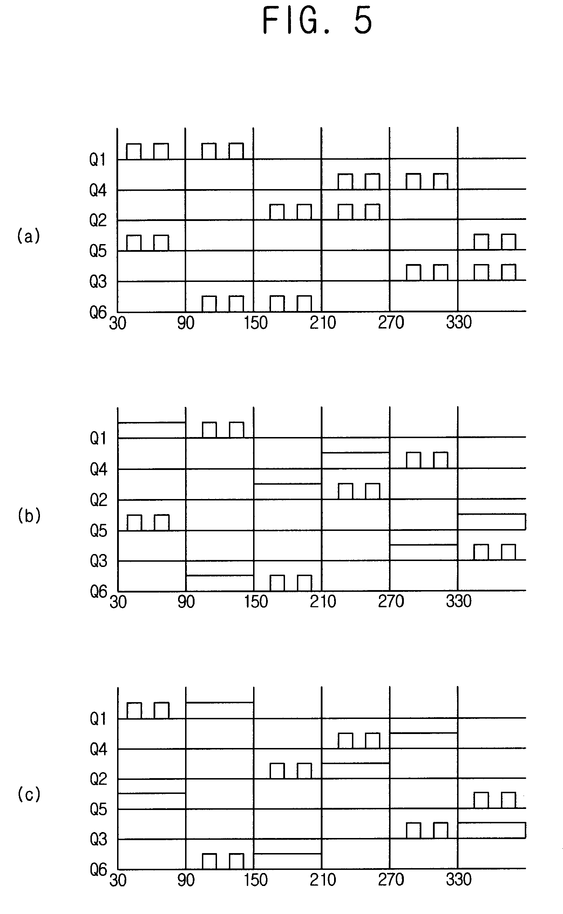

In the above described embodiment, the pulse waveform shown in Figure 4A is equivalently input to the upper transistors Q1~Q3 and the lower transistors Q4 - Q6. This is generally called a bi-polar type in which the pulse waveform shown in Figure 5A is input into the upper transistors Q1~Q3 and the lower transistors Q4 ~Q6 according to the phases.

Besides, the present invention may be applied to the pulse waveforms of an out-going type and an on-going type shown in Figures 5B and 5C, respectively. In this case, the pulse waveform of the excitation phase current shown in Figure 4B may be decreased at the turned-on section.

Thus, the reference value and the compare value are calculated by detecting the magnitude of the excitation phase current and a point in time when the compare value is higher than the reference value by a predetermined amount is determined as the point of commutation according to the rotation of the rotor, so that the inverter 3 is controlled on the basis of the point of commutation timing, thereby eliminating the conventional position sensor used for initially driving the motor.

Also, the initial driving method according to the present invention eliminates wasteful power consumption due to switching loss and reduces production cost, as compared with the conventional method for sensing the initial position of a rotor through the $P_{pulse}$.

As described above, the present invention to provide an initial driving method for a three-phase motor, in which position of a rotor is determined while the three-phase motor reaches a predetermined speed from a stop state, thereby decreasing power consumption in controlling commutation according to the position of the rotor, and reducing production cost.

**Claims**

1. An apparatus for driving three-phase brushless dc motor, the apparatus comprising:

   a three-phase bridge (3) for providing a three-phase output for energising a three-phase motor (1); and
   switching control means (7) for switching said bridge (3) in dependence a signal at a rotor position signal input so as to generate a three-phase motor driving output;
   **characterised by**
   current measuring means (5) for sensing the current supplied to the three-phase bridge (3) and means (7) for generating a rotor position signal, in dependence on the output of the current measuring means (5), and applying the generated rotor position signal to said rotor position signal input.

2. An apparatus according to claim 1, wherein the switching control means (7) is configured to switch the three-phase bridge (3) to the next phase when the measured current exceeds a reference valued derived from the current initially measured in the present phase.

3. An apparatus according to claim 2, wherein said measured currents are averages of instantaneous current readings.

4. An apparatus according to clam 1, 2 or 3, wherein the current measuring means (5) measures the current supplied to the three-phase bridge in synchronism with a pulse signal being output to a switching element (Q1~Q6) of the three-phase bridge (3).

5. An apparatus including an apparatus (3, 5, 7), according to any preceding claim, and a three-phase brushless dc motor (1) operatively coupled thereto.

6. A method of initially driving a three-phase motor, comprising:

   transmitting a first PWM driving signal to an inverter to excite two phases corresponding to position of a rotor provided in the three-phase motor;
   measuring excitation phase current corresponding to the first PWM driving signal within a cycle of the first PWM driving signal by periods equal to the cycle of the first PWM driving signal;
   calculating a reference measured-value on the basis of values continuously measured by predetermined reference times from the first measurement with regard to the excitation phase current;
   calculating a compare measured-value on the basis of values continuously measured at predetermined compare measuring intervals by the reference times with regard to the excitation phase current after the excitation phase current is measured by predetermined delay times; and
   transmitting a second PWM driving signal for commutation according to rotation of the rotor to the inverter when the compare measured-value is higher the reference measured-value by a predetermined rate according as the reference measured-value is compared with the compare measured-value.

7. The method according to claim 6, wherein the reference measured-value and the compare measured-value includes an average of the measured values of the excitation phase current.

8. The method according to claim 6, wherein the delay times is equal to the reference times.

9. The method according to claim 7, wherein the delay times is equal to the reference times.

**10.** The method according to claim 6, wherein the compare measuring interval is equal to each measuring period of the excitation phase current.

**11.** The method according to claim 7, wherein the compare measuring interval is equal to each measuring period of the excitation phase current.

**12.** The method according to claim 1, wherein the reference measured-value is calculated by an equation of $I_{ref} = \dfrac{1}{N} \times \sum_{i=1}^{N} x_i$ , where $I_{ref}$ is the reference measured-value, N is the reference number, and $x_i$ is the measured value at i$^{th}$ measurement, and the compare measured-value is calculated by an equation of $I_{com} = \dfrac{1}{N} \times \sum_{c=j}^{N+j-1} x_c$ , where $I_{com}$ is the compare measured-value, $x_c$ is the measured value at $C^{th}$ measurement, and $j$ is a natural number larger than the delay times.

**13.** The method according to claim 7, wherein the reference measured-value is calculated by an equation of $I_{ref} = \dfrac{1}{N} \times \sum_{i=1}^{N} x_i$ , where $I_{ref}$ is the reference measured-value, N is the reference number, and $x_i$ is the measured value at i$^{th}$ measurement, and the compare measured-value is calculated by an equation of $I_{com} = \dfrac{1}{N} \times \sum_{c=j}^{N+j-1} x_c$ , where $I_{com}$ is the compare measured-value, $x_c$ is the measured value at $C^{th}$ measurement, and $j$ is a natural number larger than the delay times.

**14.** The method according to claim 13, wherein the $j$ is a natural number larger than the N and is increased by 1.

**15.** The method according to claim 6, further comprising determining an initial position of the rotor when the three-phase motor is initially driven, wherein the position of the rotor includes the initial position of the rotor when the first PWM driving signal is transmitted to the inverter.

**16.** The method according to claim 6, wherein at least one of the first PWM driving signal and the second PWM driving signal has one of pulse waveforms according to a bi-polar type, an out-going type and an on-going type.

**17.** The method according to claim 7, wherein at least one of the first PWM driving signal and the second PWM driving signal has one of pulse waveforms according to a bi-polar type, an out-going type and an on-going type.

EP 1 635 447 A2

# FIG. 1

EP 1 635 447 A2

FIG. 2

8

# FIG. 3

START

S10 — DETERMINING INITIAL POSITION OF ROTATOR

S11 — TRANSMITTING FIRST PWM DRIVING SIGNAL

S12 — CALCULATING REFERENCE MEASURED-VALUE($I_{Ref}$)

CALCULATING COMPARE MEASURED-VALUE($I_{com}$) — S13

No ← $I_{Ref} * Cp \leqslant I_{com}$ ? — S14

Yes

S15 — TRANSMITTING SECOND PWM DRIVING SIGNAL

S16 — ROTATION SPEED $\geqslant$ REFERENCE SPEED? — No

Yes

END

# FIG. 4

(a)

(b)

30° ~ 90°    90° ~

Ref

com1
com2
com3
com4
com5
com6
com7
com8
com9

EP 1 635 447 A2

# FIG. 5